# EUROPÄISCHE PATENTSCHRIFT

(11) **EP 1 088 746 B1**
(45) Veröffentlichungstag und Bekanntmachung des Hinweises auf die Patenterteilung: **22.09.2004**
(21) Anmeldenummer: 00116563.8
(22) Anmeldetag: 01.08.2000
(51) Int. Cl.: B62D 25/06, B62D 65/00, B60R 13/02, B60J 7/02, B60J 7/043

(54) **Fahrzeugdachmodul mit integrierter Schiebedacheinheit**
Vehicle roof module with integrated sliding roof assembly
Module de toit véhiculaire avec ensemble de toit coulissant intégré

(30) Priorität: 29.09.1999 DE 19946804
(43) Veröffentlichungstag der Anmeldung: 04.04.2001
(73) Patentinhaber: ArvinMeritor GmbH, 63128 Dietzenbach (DE)
(72) Erfinder: Grimm, Rainer, Dipl.-Ing., 60599 Frankfurt (DE); Böhm, Horst, Dipl.-Ing., 60599 Frankfurt (DE)
(74) Vertreter: Oppermann, Mark, Dipl.-Ing.

(56) Entgegenhaltungen:
- EP-A- 0 697 299
- DE-A- 3 820 845
- DE-A- 4 230 082
- GB-A- 2 176 751
- GB-A- 2 184 404
- US-A- 5 261 722
- US-A- 5 540 478

## Beschreibung

Die Erfindung bezieht sich auf ein Fahrzeugdachmodul, insbesondere für Kraftfahrzeuge, entsprechend dem Oberbegriff des Patentanspruchs 1.

Fahrzeugdachmodule, die getrennt von der Fahrzeugkarosserie fertiggestellt und erst am Montageband in der Automobilfabrik mit der Fahrzeugkarosserie vereinigt werden, erfreuen sich insbesondere wegen der erheblichen Verkürzung der Montagezeiten am Montageband einer zunehmenden Bedeutung. Sind derartige Fahrzeugdachmodule mit einer integrierten Schiebedacheinheit ausgerüstet, eröffnet die getrennte Herstellung die vorteilhafte Möglichkeit einer Funktionskontrolle der vormontierten Schiebedacheinheit schon vor Vereinigung des Dachmoduls mit der Karosserie.

Bei einem derartigen bekannten Fahrzeugdachmodul (DE 197 09 016 A1, Fig. 9, 11) ist ein die Dachöffnung umgebender Verstärkungsrahmen in den Schaumkunststoff der Innenschale so eingeschäumt, daß an ihn der Schiebedachrahmen befestigt werden kann. Diese Ausbildung erfüllt alle Festigkeits- und Funktionsanforderungen. Fahrzeugdachmodule der in Rede stehenden Ausbildung sollen aber auch ohne Festigkeits- und/oder Funktionseinbußen ein möglichst geringes Gewicht aufweisen, um das Fahrzeuggewicht zu reduzieren und die Handhabung des Fahrzeugdachmoduls zu erleichtern.

Der Erfindung liegt daher die Aufgabe zugrunde, ein Fahrzeugdachmodul der angegebenen Gattung mit integrierter Schiebedacheinheit bereitzustellen, das ein vergleichsweise geringes Gewicht aufweist.

Die gestellte Aufgabe wird erfindungsgemäß durch die im Patentanspruch 1 angegebenen Merkmale gelöst. Die Unteransprüche enthalten vorteilhafte Ausführungsformen und Weiterbildungen der Erfindung, die nachfolgend ebenfalls beschrieben sind.

Es wurde gefunden, daß bei Anwendung der erfindungsgemäßen Merkmale auf das Einschäumen eines das Gewicht des Dachmoduls erhöhenden Verstärkungs- und Versteifungsrahmens in die Innenschale am Umfang der Dachöffnung verzichtet werden kann, weil bei erfindungsgemäßer Ausbildung einerseits die an die starre Dachhaut angeschäumte Innenschale, insbesondere wenn diese mit einer im Schaumkunststoff verteilten Faserarmierung od.dgl. versehen ist, und andererseits der Schiebedachrahmen nach seiner erfindungsgemäßen Befestigung das Dachmodul im Bereich der Dachöffnung hinreichend verstärken und versteifen.

Die hier in Alleinstellung oder in Wortkombinationen verwendete Bezeichnung "Schiebedach" soll für die Zwecke der vorliegenden Erfindung nicht nur solche Konstruktionen einschließen, bei denen der Deckel nach Absenken seiner Hinterkante zur Freigabe der Dachöffnung unter die hintere feste Dachfläche verschiebbar ist, sondern auch Schiebehebedächer, bei denen der Deckel außerdem ausgehend von seiner Schließstellung um eine in der Nähe seiner Vorderkante vorgesehene Schwenkachse zur Ausstellung über die feste Dachfläche verschwenkt werden kann. Auch vorn scharnierte lüftungsklappenähnlich ausstellbare Deckel und sogenannte Oberfirstschiebedächer, bei denen der Deckel nach Anheben seiner Hinterkante teilweise zur Freigabe der Dachöffnung über die hintere feste Dachfläche verschiebbar ist, sollen eingeschlossen sein. Das gilt für alle Konstruktionen, bei denen ein unter der festen Dachfläche befestigter Schiebedachrahmen vorhanden ist.

Für die Ausbildung der Befestigungselemente werden verschiedene Ausführungsformen vorgeschlagen. So können die Elemente nach einer ersten Ausführungsform gemäß Anspruch 2 in die Innenschale eingeschäumte Gewindeelemente sein, an welcher ein Flansch des Schiebedachrahmens angeschraubt ist. Diese Gewindeelemente können entweder Innengewinde oder Außengewinde besitzen, so daß der Schiebedachrahmen entweder mittels Schrauben oder mittels Muttern angeschraubt wird.

Eine zweite Ausführungsform sieht entsprechend Anspruch 3 in dem Schaumkunststoff der Innenschale eingeschäumte Metallanker vor, die mit Umbiegezungen durch entsprechende Flanschöffnungen des Schiebedachrahmens hindurchgeführt sind. Die Umbiegezungen sind hinter dem Flansch unter Anpressung des Flansches an die Innenschale umgebogen. Diese Befestigungselemente erlauben eine besonders schnelle Montage des Schiebedachrahmens.

Eine dritte im Anspruch 4 angegebene Ausführungsform verzichtet auf separate bzw. separat einzuschäumende Befestigungselemente, indem die Elemente aus dem Schaumkunststoff der Innenschale beim Ausschäumen der starren Dachhaut selbst und mit der Innenschale einteilig geformt sind und nach Durchtritt durch entsprechende Flanschöffnungen des Schiebedachrahmens diesen an der Innenschale festlegen. Bei einer ersten ebenfalls eine schnelle Montage des Schiebedachrahmens ermöglichenden Variante gemäß Anspruch 5 erfolgt das durch eine klipsartige Ausbildung der betreffenden geschäumten Elemente, so daß diese federnd hinter dem Flansch einrasten können. Eine zweite Variante nach Anspruch 6 sieht vor, die geschäumten Elemente als Thermoniete auszubilden, wobei die Elemente nach dem Durchtritt durch die Flanschöffnungen mit einem durch Erwärmen und Anstauchen gebildeten Nietkopf versehen werden.

Für die Befestigung des Schiebedachrahmens an der Innenschale bei gleichzeitiger Schaffung des erforderlichen Abstands des Schiebedachrahmens von der festen Dachhaut ist es nicht erforderlich, die Innenschale des Dachmoduls im Bereich der Dachöffnung insgesamt zu verdicken, es reicht vielmehr entsprechend Anspruch 7 aus, die Innenschale an den vorgesehenen Befestigungsstellen mit aus dem Schaumkunststoff beim Ausschäumen der festen Dachhaut geformten Sockeln zu versehen, welchen der Schiebedachrahmen mit seinem Befestigungsflansch anliegt. Die Befestigungselemente sind dann an diesen Sockeln angeordnet. Diese Sockel müssen auch nicht als durchgehende Rippen od.dgl. ausgebildet sein, Schaummaterial einsparende Rippenabschnitte oder sogar zapfenförmige Gestaltungen an den Befestigungsstellen reichen aus, um eine sichere und das Dachmodul versteifende Befestigung des Schiebedachrahmens zu erreichen.

Im Verfolg des Erfindungsgedankens einer vereinfachten Befestigung kann gemäß Anspruch 8 die Innenschale des Dachmoduls auf die gleiche Weise an dem Karosserierahmen befestigt sein wie der Schiebedachrahmen an der Innenschale.

Weitere Einzelheiten der Erfindung werden anhand der unterschiedliche Ausführungsformen darstellenden zum Teil schematischen Zeichnungen näher erläutert. Darin zeigt:
- Fig. 1: eine Perspektivansicht des Dachbereichs eines Kraftfahrzeugs,
- Fig. 2: einen abgebrochenen Schnitt entsprechend der Linie II-II in Fig. 1, betreffend eine erste Ausführungsform,
- Fig. 3: einen abgebrochenen Schnitt entsprechend der Linie II-II in Fig. 1, betreffend eine zweite Ausführungsform,
- Fig. 4: einen abgebrochenen Schnitt entsprechend der Linie II-II in Fig. 1, betreffend eine erste Variante einer dritten Ausführungsform,
- Fig. 5: einen abgebrochenen Schnitt entsprechend der Linie V-V in Fig. 4,
- Fig. 6: einen abgebrochenen Schnitt entsprechend der Linie II-II in Fig. 1, betreffend eine zweite Variante der dritten Ausführungsform bei noch nicht befestigtem Schiebedachrahmen und
- Fig. 7: eine Schnitteinzelheit aus Fig. 6, jedoch bei befestigtem Schiebedachrahmen.

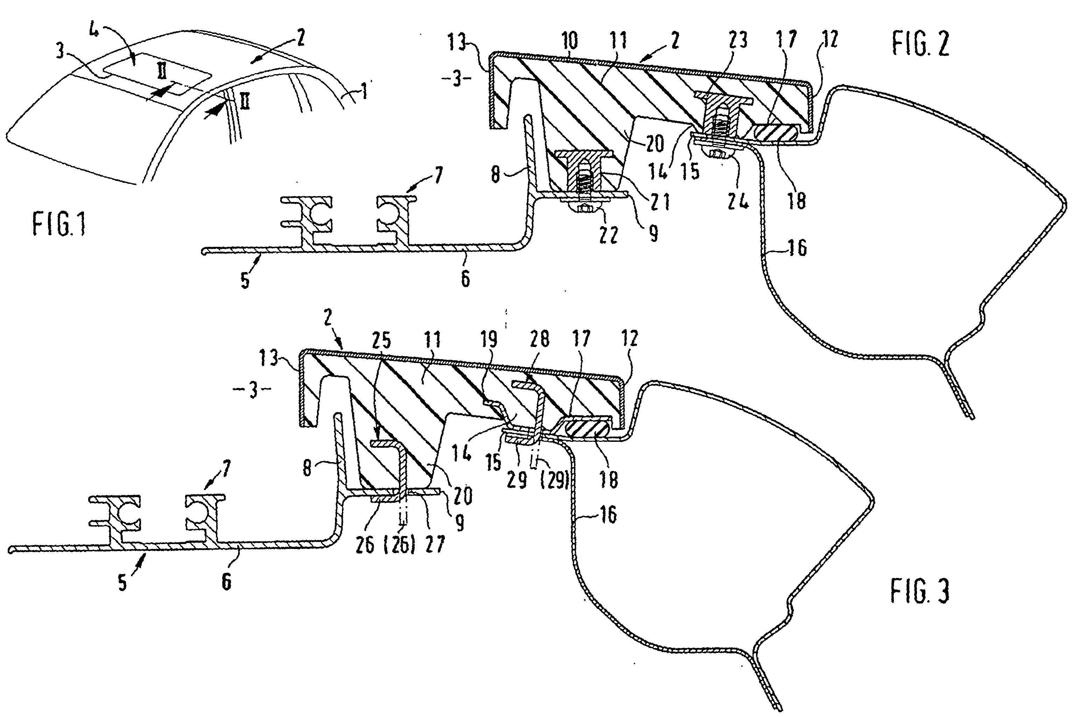

In Fig. 1 ist das bereits an der Fahrzeugkarosserie 1 montierte Fahrzeugdachmodul 2 dargestellt, in dessen Dachöffnung 3 der Schiebedeckel 4 einer Schiebedacheinheit in seiner Schließlage dargestellt ist. In den die unterschiedlichen Ausführungsformen und Varianten darstellenden Figuren 2, 3, 4 und 6 ist von der Schiebedacheinheit zur Vereinfachung nur der Schiebedachrahmen 5, nicht aber der als Glas- oder Blechdeckel ausgebildete Schiebedeckel 4 dargestellt, und auch die Antriebs- und Funktionselemente der Schiebedacheinheit sind nicht dargestellt, weil dieser Bereich der Schiebedacheinheit nicht zur vorliegenden Erfindung gehört und dem Stand der Technik entsprechend ausgebildet sein kann.

Der abgebrochen dargestellte Schiebedachrahmen 5, der ein-oder mehrteilig aus einem Extrusionsprofil aus Aluminium hergestellt sein kann, besitzt einen Basissteg 6, an welchem sich eine Führungsschiene 7 befindet, die in bekannter Weise den Schiebedeckel 4, aber auch nicht dargestellte Betätigungselemente führt, mit deren Hilfe der Schiebedeckel 4 bezüglich der Dachöffnung 3 verlagerbar angetrieben wird. An einem sich etwa senkrecht von dem Basissteg 6 nach oben erstreckenden Randsteg 8 befindet sich ein davon etwa waagerecht nach außen abstehender Befestigungsflansch 9.

Das Dachmodul 2 besteht aus einer aus einem metallischen Werkstoff, z.B. Aluminium- oder Stahlblech, oder aus einer aus Kunststoffolie geformten Außenschale oder Dachhaut 10 und einer damit sandwichartig verbundenen Innenschale 11, die aus einem Schaumkunststoff, beispielsweise einem PUR-Schaumstoff, durch Aufschäumen auf die Innenfläche der Dachhaut 10 mit dieser fest verbunden ist. Die Innenschale 11 erstreckt sich bis zu einer äußeren umlaufenden Abkantung 12 der Dachhaut 10 und auch bis zu einer die Dachöffnung 3 begrenzenden inneren Abkantung 13. Alle Formstrukturen der Innenschale 11 werden bei dem Aufschäumen des Kunststoffes auf die Dachhaut 10 in der Schäumform gebildet.

Die Innenschale 11 ist in der Nähe des Außenrandes des Dachmoduls 2 mit einer nach unten vorstehenden umlaufenden Rippe 14 versehen, mit deren Unterfläche das Dachmodul 2 auf einen nach innen weisenden Flanschrand 15 des Karosserierahmens 16 aufgelegt und befestigt ist, wie noch beschrieben wird. Zwischen der Rippe 14 und der äußeren Abkantung 12 befindet sich eine umlaufend eingeformte Nut 17 zur Aufnahme einer Kleberraupe 18 oder einer eingelegten Dichtung, wodurch die erforderliche Abdichtung zwischen Dachmodul 2 und Karosserierahmen 16 herbeigeführt wird. Bei den in den Figuren 3, 4 und 6 dargestellten Ausführungsformen sind an die Innenschale 11 im Bereich der Rippe 14 und der Nut 17 deren Kontur folgend Verstärkungsbleche 19 angeschäumt.

Weiterhin besitzt die Innenschale 11 in der Nähe der inneren Abkantung 13 an den Stellen der Befestigung des Schiebedachrahmens 5 aus dem Schaumkunststoff der Innenschale 11 gebildete nach unten vorstehende Sockel 20, deren Unterfläche der Schiebedachrahmen 5 mit seinem Befestigungsflansch 9 anliegt. Diese Sockel 20 können rippenartig, rippenabschnittsartig oder auch zapfenförmig geformt sein, wobei die Außenflächen jeweils zueinander schräg verlaufen, um die Entformung des Dachmoduls 2 aus der Schäumform zu erleichtern. An den Sockeln 20 ist der Schiebedachrahmen 5 entsprechend den Ausführungsbeispielen auf unterschiedliche Weise befestigt, wie nachfolgend beschrieben werden soll.

Bei der ersten Ausführungsform gemäß Fig. 2 sind die Befestigungselemente in die Sockel 20 eingeschäumte, d.h. vom Schaumkunststoff der Innenschale 11 mit Ausnahme ihrer Unterflächen vollständig umschlossene Gewindemuttern 21, in welche durch den Befestigungsflansch 9 des Schiebedachrahmens 5 hindurchgeführte Schrauben 22 eingeschraubt sind. Entsprechende Befestigungselemente sind zwischen Karosserierahmen 16 und Dachmodul 2 vorgesehen. Hierbei sind Gewindemuttern 23 im Bereich der Rippe 14 in die Innenschale 11 eingeschäumt, wobei lediglich die Unterflächen der Gewindemuttern 23 freiliegen. In die Gewindemuttern 23 sind jeweils durch den Flanschrand 15 des Karosserierahmens 16 hindurchgeführte Schrauben 24 eingeschraubt.

Die in Fig. 3 gezeigte zweite Ausführungsform verwendet als Befestigungselemente in die Sockel 20 eingeschäumte Metallanker 25, die beispielsweise jeweils ursprünglich die Form eines Blechwinkels aufweisen, deren kürzerer Schenkel und ein erheblicher Bereich des längeren Schenkels in den Schaumkunststoff der Innenschale 11 eingeschäumt sind, während der längere Schenkel aus dem Sockel 20 nach unten vorsteht und eine Umbiegezunge 26 bildet. Die Umbiegezungen der Metallanker 25 werden durch entsprechende Öffnungen 27 in dem Befestigungsflansch 9 des Schiebedachrahmens 5 hindurchgeführt, d.h. der Schiebedachrahmen wird mit den Öffnungen 27 auf die zunächst noch geradlinigen Umbiegezungen 26 aufgesteckt. Danach werden die Umbiegezungen hinter dem Befestigungsflansch 9 unter Anpressung des Flansches an die Innenschale 11 bzw. die Sockel 20 umgebogen. Entsprechende Befestigungselemente können bei dieser zweiten Ausführungsform auch zwischen Karosserierahmen 16 und Dachmodul 2 vorgesehen sein. Hierbei sind im Bereich der Rippe 14 Metallanker 28 in die Innenschale 11 eingeschäumt, die wiederum mit einer Umbiegezunge 29 in diesem Fall durch eine Öffnung des Verstärkungsblechs 19 nach unten zunächst geradlinig vorstehen. Bei dem Auflegen des Dachmoduls 2 auf den Flanschrand 15 des Karosserierahmens 16 treten die Umbiegezungen 29 durch entsprechende Öffnungen im Flanschrand 15 hindurch und werden unter Anpressung des Dachmoduls an den Flanschrand 15 hinter dem Flanschrand 15 bis zur Anlage an diesen umgebogen.

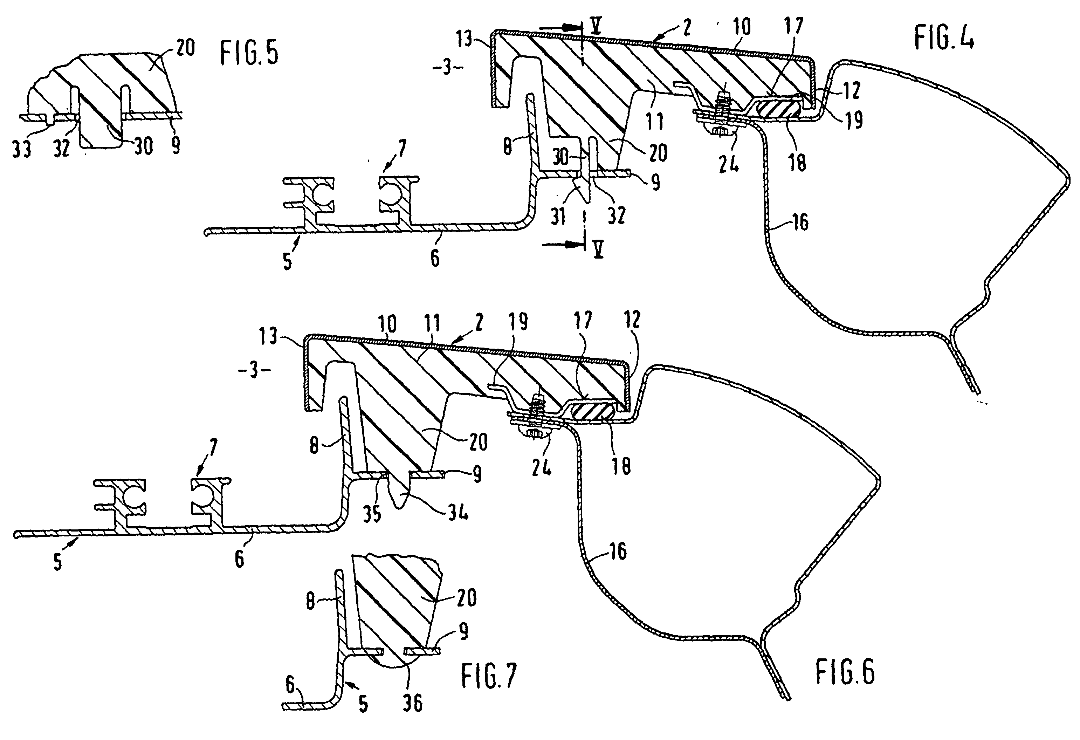

Die in den Figuren 4 bis 6 dargestellten zwei Varianten der dritten Ausführungsform haben die Gemeinsamkeit, daß die Befestigungselemente aus dem Schaumkunststoff der Innenschale 11 selbst geformte und damit einteilige Vorsprünge sind, welche jeweils durch eine entsprechende Öffnung in dem Befestigungsflansch 9 des Schiebedachrahmens 5 hindurchgeführt sind und auf unterschiedliche Weise hinter den Befestigungsflansch 9 greifen, um den Flansch an die Innenschale 11, d.h. an die Sockel 20, anzupressen.

Bei der in den Figuren 4 und 5 gezeigten Variante sind die Vorsprünge 30 seitlich federnd ausgebildet und greifen jeweils mit einem Hakenansatz 31 hinter den Befestigungsflansch 9, wenn der Hakenansatz 31 jeweils durch die zugehörige Öffnung 32 im Befestigungsflansch hindurchgetreten ist. Ausbildung und Anordnung der Vorsprünge 30 und der Hakenansätze 31 bezüglich der Öffnungen 32 sind derart, daß der Schiebedachrahmen 5 an der Innenschale 11 klipsartig verrastet wird. Um eine genaue Positionierung zwischen Schiebedachrahmen 5 und Innenschale 11 sicherzustellen, können an den Sockeln 20 Indexstifte 33 vorgesehen sein, die in entsprechende Paßbohrungen des Befestigungsflansches 9 eingreifen, wie das in Fig. 5 gezeigt ist.

Bei der in den Figuren 6 und 7 dargestellten zweiten Variante der dritten Ausführungsform sind die Vorsprünge 34 der Sockel 20 zunächst im wesentlichen von zylindrischer Gestalt und greifen jeweils in eine entsprechende Öffnung 35 des Befestigungsflansches 9 ein. Nach dem Aufstecken des Schiebedachrahmens 5 auf die Vorsprünge 34 werden diese erwärmt und zu einem verdickten Kopf 36 verformt, der nicht durch die Öffnung 35 hindurchtreten kann. Auf diese Weise wird der Schiebedachrahmen 5 mittels Thermonieten an der Innenschale 11 befestigt.

Auch bei den beiden Varianten der dritten Ausführungsform können die jeweiligen Innenschalen des Dachmoduls auf die gleiche Weise an dem Karosserierahmen befestigt sein wie der Schiebedachrahmen an der Innenschale. Gezeigt sind in den Figuren 4 und 6 indessen Schraubbefestigungen, bei denen Schrauben 24 durch den Flanschrand 15 des Karosserierahmens hindurchgeführt sind und mit Gewinde der Verstärkungsbleche 19 eingreifen.

Der bei Schiebedächern regelmäßig vorhandene Innenhimmel und auch die üblicherweise vorhandenen Verkleidungen des Karosserierahmens 16 wurden in den Zeichnungen aus Gründen der Vereinfachung nicht dargestellt. Der Innenhimmel und die Verkleidungen können einteilig aus einem Schaumkunststoff geformt sein, wie das in der DE 197 09 016 A1 in den Figuren 9 und 11 dargestellt ist.

Es wird ein an einem Karosserierahmen zu montierendes Fahrzeugdachmodul mit integrierter Schiebedacheinheit vorgeschlagen, bei welcher in einer aus Schaumkunststoff an eine starre Dachhaut angeschäumte Innenschale kein gewichtserhöhender Verstärkungsrahmen od.dgl. eingeschäumt ist, an welchem der Schiebedachrahmen zu befestigen ist. Vielmehr wird der Schiebedachrahmen an mehreren voneinander beabstandeten und um die Dachöffnung der Schiebedacheinheit verteilten Stellen an der Innenschale mittels nur an diesen Stellen vorhandener und damit fest verbundener Elemente befestigt. Dabei kann die Innenschale auf die gleiche Weise an dem Karosserierahmen befestigt sein wie der Schiebedachrahmen an der Innenschale.

## Patentansprüche

1. Fahrzeugdachmodul, insbesondere für Kraftfahrzeuge, das eine starre Dachhaut (10) mit einer an deren Innenfläche angeschäumten Innenschale (11) aus Schaumkunststoff aufweist, getrennt von der Fahrzeugkarosserie hergestellt, mit seinen Außenrändern auf einen Karosserierahmen (16) auflegbar ist, mit diesem fest verbindbar ist, eine durch einen Schiebedeckel (4) einer Schiebedacheinheit verschließbare Dachöffnung (3) in der starren Dachhaut (10) besitzt und mit einem unterhalb der Dachhaut (10) befestigten Schiebedachrahmen (5) für die Lagerung und Führung der Funktionselemente der Schiebedacheinheit ausgerüstet ist, **dadurch gekennzeichnet, daß** der Schiebedachrahmen (5) an mehreren voneinander beabstandeten und um die Dachöffnung (3) verteilten Stellen an der Innenschale (11) mittels nur an diesen Stellen vorhandener und damit fest verbundener Elemente (21, 25, 30, 34) befestigt ist.

2. Fahrzeugdachmodul nach Anspruch 1, **dadurch gekennzeichnet, daß** die Elemente in den Schaumkunststoff der Innenschale (11) eingeschäumte Gewindeelemente (21) sind, an welche ein Flansch (9) des Schiebedachrahmens (5) angeschraubt ist.

3. Fahrzeugdachmodul nach Anspruch 1, **dadurch gekennzeichnet, daß** die Elemente in den Schaumkunststoff der Innenschale (11) eingeschäumte Metallanker (25) sind, die jeweils mit einer Umbiegezunge (26) aus dem Schaumkunststoff vorstehen, welche durch eine entsprechende Öffnung (27) in einem Flansch (9) des Schiebedachrahmens (5) hindurchgeführt und hinter dem Flansch (9) unter Anpressung des Flansches an die Innenschale (11) umgebogen sind.

4. Fahrzeugdachmodul nach Anspruch 1, **dadurch gekennzeichnet, daß** die Elemente aus dem Schaumkunststoff der Innenschale (11) geformte und damit einteilige Vorsprünge (30, 34) sind, welche jeweils durch eine entsprechende Öffnung (32, 35) in einem Flansch (9) des Schiebedachrahmens (5) hindurchgeführt und hinter dem Flansch (9) unter Anpressung des Flansches an die Innenschale (11) greifen.

5. Fahrzeugdachmodul nach Anspruch 4, **dadurch gekennzeichnet, daß** die Vorsprünge (30) seitlich federnd ausgebildet sind und mit einem Hakenansatz (31) hinter den Flansch (9) greifen.

6. Fahrzeugdachmodul nach Anspruch 4, **dadurch gekennzeichnet, daß** die Vorsprünge (34) jeweils hinter dem Flansch (9) thermisch und dauerhaft zu einem verdickten Kopf (36), der nicht durch die Öffnung (35) hindurchtreten kann, verformt sind.

7. Fahrzeugdachmodul nach einem der Ansprüche 1 bis 6, **dadurch gekennzeichnet, daß** die Innenschale (11) an den Stellen der Befestigung des Schiebedachrahmens (5) mit aus dem Schaumkunststoff gebildeten Sockeln (20) versehen ist, denen der Schiebedachrahmen (5) anliegt.

8. Fahrzeugdachmodul nach einem der Ansprüche 1 bis 7, **dadurch gekennzeichnet, daß** der Karosserierahmen (16) auf die gleiche Weise an der Innenschale (11) befestigt ist wie der Schiebedachrahmen (5) an der Innenschale (11).

## Claims

1. A vehicle roof module, in particular for motor vehicles, which comprises a rigid roof skin (10) with an inner shell (11) of plastics foam foamed on the inner surface thereof, the module which is manufactured separately from the vehicle bodywork, is positionable with its outer edges on a bodywork frame (16), and is firmly connectable therewith, the module comprises a roof opening (3) in the rigid roof skin (10) closable by a sliding cover (4) of a sunroof unit and is provided with a sunroof frame (5), attached beneath the roof skin (10), for mounting and guiding operating parts of the sunroof unit, **characterized in that** the sunroof frame (5) is attached to the inner shell (11) at a plurality of spaced points distributed around the roof opening (3) by means of elements (21, 25, 30, 34) present only at these points and connected firmly therewith.

2. A vehicle roof module according to claim 1, **characterized in that** the elements are threaded elements (21) foamed into the plastics foam of the inner shell (11), onto which threaded elements a flange (9) of the sunroof frame (5) is screwed.

3. A vehicle roof module according to claim 1, **characterized in that** the elements are metal ties (25) foamed into the plastics foam of the inner shell (11), which ties project out of the plastics foam in each case with a bendable tongue (26), which passes through a corresponding opening (27) in a flange (9) of the sunroof frame (5) and are bent round behind the flange (9), thereby pressing the flange against the inner shell (11).

4. A vehicle roof module according to claim 1, **characterized in that** the elements comprise projections (30, 34) formed from the plastics foam of the inner shell (11) and thus in one piece, which projections each pass through a corresponding opening (32, 35) in a flange (9) of the sunroof frame (5) and engage behind the flange (9), thereby pressing the flange against the inner shell (11).

5. A vehicle roof module according to claim 4, **characterized in that** the projections (30) are of laterally resilient construction and engage behind the flange (9) by means of a hooked lug (31).

6. A vehicle roof module according to claim 4, **characterized in that** the projections (34) are each deformed permanently by heat behind the flange (9) to produce a head (36) of increased thickness, which cannot pass through the opening (35).

7. A vehicle roof module according to one of the claims 1 to 6, **characterized in that** the inner shell (11) is provided with pedestal elements (20) formed from the plastics foam at the points of attachment of the sunroof frame (5), the sunroof frame (5) lying against said pedestal elements.

8. A vehicle roof module according to one of the claims 1 to 7, **characterized in that** the bodywork frame (16) is attached to the inner shell (11) in the same way as the sunroof frame (5) is attached to the inner shell (11).

## Revendications

1. Module de toit de véhicule, en particulier pour véhicules automobiles, qui présente une pellicule de toit rigide (10) avec une coque intérieure (11) en mousse de matière plastique appliquée par moussage sur sa surface intérieure, qui est réalisé séparément de la carrosserie du véhicule et qui peut être posé avec ses bords extérieurs sur un cadre (16) de carrosserie et qui peut être relié solidairement à celui-ci, qui possède dans la pellicule rigide (10) une ouverture de toit (3) susceptible d'être fermée par un couvercle coulissant (4) d'une unité de toit coulissant et qui est équipé d'un cadre de toit coulissant (5) fixé au-dessous de la pellicule de toit (10) pour le montage et le guidage des éléments fonctionnels de l'unité de toit coulissant, **caractérisé en ce que** le cadre de toit coulissant (5) est fixé sur la coque intérieure (11) en plusieurs points espacés les uns des autres et répartis autour de l'ouverture de toit (3) au moyen d'éléments (21, 25, 30, 34) existant seulement en ces points et reliés solidairement à ceux-ci.

2. Module de toit de véhicule selon la revendication 1, **caractérisé en ce que** les éléments sont des éléments à pas de vis (21) noyés dans la mousse de matière plastique de la coque intérieure (11), sur lesquels est vissée une bride (9) du cadre de toit coulissant (5).

3. Module de toit de véhicule selon la revendication 1, **caractérisé en ce que** les éléments sont des ancrages métalliques (25) noyées dans la mousse de matière plastique de la coque intérieure (11), qui font chacun saillie avec une languette (26) repliée hors de la mousse de matière plastique, laquelle est passée à travers une ouverture (27) correspondante dans une bride (9) du cadre de toit coulissant (5) et qui est repliée derrière la bride (9) en pressant la bride contre la coque intérieure (11).

4. Module de toit de véhicule selon la revendication 1, **caractérisé en ce que** les éléments sont des saillies (30, 34) moulées à partir de la mousse de matière plastique de la coque intérieure (11) et par conséquent réalisées d'une seule pièce, lesquelles passent chacune à travers une ouverture (32, 35) correspondante dans une bride (9) du cadre de toit coulissant (5) et s'engagent derrière la bride (9) en pressant la bride contre la coque intérieure (11).

5. Module de toit de véhicule selon la revendication 4, **caractérisé en ce que** les saillies (30) sont réalisées avec élasticité latérale et s'engagent avec un appendice en forme de crochet (31) derrière la bride (9).

6. Module de toit de véhicule selon la revendication 4, **caractérisé en ce que** les saillies (34) sont déformées chacune derrière la bride (9) de façon thermique et permanente pour former une tête (36) renflée qui ne peut pas passer à travers l'ouverture (35).

7. Module de toit de véhicule selon l'une des revendications 1 à 6, **caractérisé en ce que** la coque intérieure (11) est pourvue, sur les points de fixation du cadre de toit coulissant (5), de socles (20) formés en mousse de matière plastique sur lesquels le cadre de toit coulissant (5) est en appui.

8. Module de toit de véhicule selon l'une des revendications 1 à 7, **caractérisé en ce que** le cadre de carrosserie (16) est fixé de la même manière sur la coque intérieure (11) que l'est le cadre de toit coulissant (5) sur la coque intérieure (11).
